# EUROPEAN PATENT APPLICATION

(11) **EP 0 801 355 A2**
(43) Date of publication of application: **15.10.1997**
(21) Application number: 97105162.8
(22) Date of filing: 26.03.1997
(51) Int. Cl.: G06F 17/50

(54) **Method and apparatus for parametric centrifuge applications**

(30) Priority: 09.04.1996 US 630046
(71) Applicant: BAKER HUGHES INCORPORATED, Houston Texas 77027 (US)
(72) Inventor: Prilutsky, Boris, Brookline, MA 02146 (US); Soubble, Vernon, South Walpole, MA 02071 (US)
(74) Representative: Ebbinghaus, Dieter, Dipl.-Ing.

(57) **Abstract**

A method and apparatus for the automated generation of designs, specifications, pricing, manufacture, installation, and re-engineering of centrifuges, Young filters and other similar machines based on parameterized inputs is presented. In accordance with the present invention, a computerized system accepts a sequence of inputs and will produce at least one of several types of output used in the costing, design, and manufacturing of, e.g., continuous feed centrifuges. The computerized system has a user interface in the form of a series of event-driven menus from which a user chooses the input and output needed to complete their tasks. It will be appreciated, that all that is required in the way of parametric inputs are the customer's material requirements, whereby an appropriate machine type is selected, designed, priced and related manufacturing information captured and generated. The parametric tool of the present invention allows the machine design to be modified at all levels to meet specific customer requirements, e.g., type of machine, size constraints, etc. Individual parametric routines may be selected to allow customized design of a specific part of a machine or all of the parts individually or collectively.

## Description

### Background of the Invention:

The present invention relates generally to centrifuges, Young filters and other similar machines. More specifically, the present invention relates to a method and apparatus for the automated generation of designs, specifications, pricing, manufacture, installation and re-engineering of such machines based on parameterized inputs.

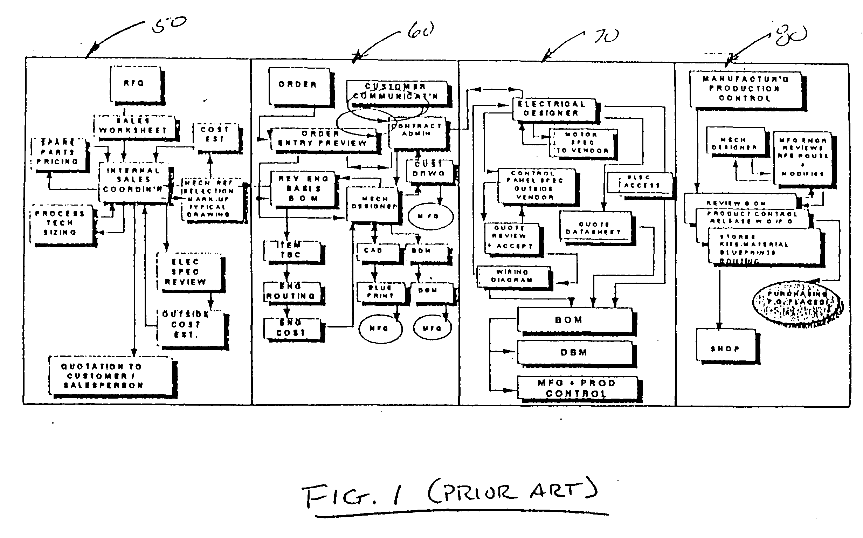

Continuous feed centrifuges are used in industrial and laboratory applications for the separation of solids and liquids, and the separation of one liquid stream into multiple streams. Continuous feed centrifuges, explained in more detail below, represent significant capital expenditures on the part of the purchaser and require the centrifuge manufacturer to invest at least six man months in the design phase of a typical unit. Following approval of the design by the customer, manufacturing and installation takes additional months. The initial sales and contracting phase, shown generally at 50, FIGURE 1, herein labeled prior art, of a typical purchase is itself a long procedure, made difficult and time consuming by the need of the sales force to relay the customer's specifications and performance parameters to an internal design team that must so-called 'rough design' a centrifuge so that cost estimates, time of delivery estimates and site recommendations can be made to the prospective purchaser, shown generally at 60, FIGURE 1. After generating a rough design, the internal design team relays the information back to the sales force who then gives it to the potential purchaser. This is an iterative loop, continuing until the customer and the manufacturer agree on a design and related contractual aspects such as delivery times. The time gaps involved in such a long process invites communication problems and interference from outside factors and makes any changes in specification tedious and arduous. Thus, there are significant time and monetary costs for the customer and the manufacturer in the negotiations stage as well as the actual final design, manufacturing, and installation of a centrifuge.

The complexity inherent in the purchase, construction, and installation of continuous feed centrifuges becomes evident when looking at the design of such centrifuges in general. There are different types of continuous feed centrifuges, including solid bowl and filtering pusher and scroll/screen centrifuges, hybrid sedimenting and filtering screen bowl centrifuges, and hybrid vacuum and sedimentary filtering units.

Examples of continuous feed centrifuges are found in U.S. Patent Nos. 4,381,849; 4,464,162; 5,147,277 and 5,378,364, all of which are incorporated herein by reference. A solid bowl or decanter centrifuge generally includes an outer bowl, an inner hub carrying a scroll conveyor, a feed compartment within the conveyor wherein the feed slurry is accelerated to speed before being introduced into the separation pool, and discharge ports for cake solids (e.g., solid or heavy phase discharge or output stream) and clarified liquid or centrate (e.g.,liquid or light phase discharge or output stream). The bowl includes a cylindrical section and a conical section, with the conical shape tapered inward towards the centerline of the bowl. The bowl and the hub are rotated at high, angular speeds so that heavier solid particles of a slurry, after accelerated to speed and introduced into the bowl, are forced by centrifugation into an annular layer along the inside bowl surface thereof. By differential rotation of the scroll conveyor and the bowl, the sediment is conveyed or scrolled to a cake discharge opening at the smaller, conical end of the bowl. Additional discharge openings are provided in the bowl, usually at an end opposite of the conical section for discharging a liquid phase or liquid phases separated from the solid particles in the centrifuge apparatus.

Initial designing and design refinement, shown generally at 60 and 70, FIGURE 1, for specific applications of such centrifuges are a complex task involving considerable engineering work, including mechanical engineering, analog and digital electronic engineering, and civil engineering work for site specification and preparation. The engineering and manufacturing tasks, shown generally at 80, FIGURE 1, involved in the design and construction of these large centrifuges are not only complex in themselves, but require extensive coordination and interaction among represented engineering disciplines. Design decisions or design constraints made by one team of engineers can readily affect the parameters in which another set of engineers must work, making the design process even more complex as design decision trade-offs are passed back and forth between collocation engineering groups working in parallel.

Due to the complicated and expensive nature of the current design process, once a centrifuge is designed and built for a specified slurry and slurry flow rate, it and its major components are catalogued and re-used whenever a customer requests a centrifuge having specifications close to the catalogued item. Doing so has multiple advantages, saving time and expense throughout the process. During contract negotiations, the sales force can make reasonable costing and delivery estimates with little or no additional involvement of the engineering staff, the final design specifications can be made with substantially reduced engineering time since most of the design will be known, manufacturing costs and time to completion estimates can be made with a high degree of reliability, manufacturing has experience setting up its tools and equipment for the known design saving additional time, and site installation is a known quantity. The higher costs associated with the purchase of new designs means that many installations may not have the ability to engage in design variation studies nor explore the consequences of alternate scenarios when researching applications of the centrifuges. Potentially advantageous design improvements may be missed because of the difficulty and expense associated with the design process; additionally missed opportunities include situations having tight time windows and niche markets.

### Summary of the Invention:

The above-discussed and other problems and deficiencies of the prior art are overcome or alleviated by the method and apparatus for the automated generation of designs, specifications, pricing, manufacture, installation and re-engineering of centrifuges, Young filters and other similar machines based on parameterized inputs of the present invention. Although specific reference is made throughout this application to centrifuge, such is also applicable to Young filters and other similar machines. The present invention provides for enormous gains in efficiency, typically reducing a design cycle from more than six months to days or less (depending greatly on the processing power of the computer system) and sales estimates from weeks or days to hours.

In accordance with the present invention, a computerized system accepts a sequence of inputs and will produce at least one of several types of output used in the costing, design, and manufacturing of, e.g., continuous feed centrifuges. The computerized system has a user interface in the form of a series of event-driven menus from which a user chooses the input and output needed to complete their tasks. It will be appreciated, that all that is required in the way of parametric inputs will be the customers material requirements, whereby an appropriate machine type is selected, designed, priced and related manufacturing information generated. The parametric tool of the present invention allows the machine design to be modified at all levels to meet specific customer requirements, e.g.,type of machine, size constraints, etc. Individual parametric routines may be selected to allow customized design of a specific part of a machine or all of the parts individually or collectively.

The individual parametric routine are accessed through a main menu interface. The system has the option of being configured so that not all users have access to all portions of the system. It is often very desirable for designated groups of users to be specifically restricted to certain subsets or portions of the system. An example of one set of users typically grouped together would be people on the collocated sales force. The sales force would have access to the portion of the system they need to make initial costing and configuration estimates for a potential centrifuge purchaser.

This portion of the system available to salespersons is architected into at least two components, one of which is an input (parameterized data) collection front-end which comprises a user interface using an event-driven series of menus containing fields the user is prompted to make simple selections. A programmed sequence of menus, invoking submenus when selected or parametric data is requested.

The data collection client/server front-end is preferably installed on a portable or personal computer, however it may be installed on a mainframe. Installing the data collection front-end on a portable personal computer allows the sales force to work with a customer at the customer's location. The sales person can then link to the portion of the system resident at the manufacturer's location, download the collected data via any kind of telecommunications connection, wait for the main processing system to run the design I/O (engineering/manufacturing data) and costing programs available to the salesperson, and then download the results into the portable personal computer. The data collection front-end can then be used to display the results to the customer, allowing the salesperson and the customer to take whatever next step is appropriate. This will normally be an iterative process, with the customer and the salesperson making several runs using the front-end portion and back-end portion of the system to arrive at a design and cost satisfactory to the customer. Each iteration takes weeks when using the prior art method; using the system according to the current invention reduces the time for each iteration to mere hours or less.

The present invention allows multiple groups to be defined. It is apparent that there exists other logical groups of users in addition to the sales force who would form a group, and will need access to certain portions of the system and not others. For example, each engineering task force for a particular design effort would be a unit or group of users, and the contract administrators would also be a group. Each group will be granted access to portions of the system needed to do their jobs, and not allowed access to portions of the system for which they have no need. The system would not allow contract administrators access to engineering data and programs, and would allow read-only access to specified results of engineering portions of the system. It will be apparent to those skilled in the art that the system can be configured using concepts of user groups and the access controls of read, write, or no access applied to both groups and individual users.

The parametric tool of the present invention is not required to be localized to a particular computer or computers. The parametric tool may have portions physically installed on many computers distributed throughout administration, sales, and engineering, as the need arises. Because of its compute-intensive nature, maintenance requirements, and need for security, the portion of the system that actually designs a centrifuge from the input parameters will be located at a fixed in-house location. This computer system will be linked via any of the well-known networking or telecommunications methods to other computer systems on which other portions of the system of this invention reside. Information which is transmitted includes, for example, numerical controlled machining data taken from two dimensional and three dimensional drawings of the final design, which is sent directly to computers in the manufacturing plants and then to the numerically controlled machines on the manufacturing floor as needed.

An important feature of the present invention is the time reduction in quoting and designing of centrifuges. Instead of taking six months to go through a full design cycle, the present invention can produce a completed design (generate the internally required documentation for design and manufacturing such as the engineering drawings, geometric data for solid and wireframe models, the production of numerically controlled machine instructions from the geometric data, the transfer of this data to the numerically controlled machines in manufacturing, and the documentation manufacturing needs to produce the centrifuge including Bills Of Materials (BOM) and factory routing sheets) in a matter of days or less. Additionally, the present invention allows customers the ability to make design changes and quickly see the impact on price. Further, the parametric data is used to generate an installation and maintenance manual for the designed machine.

The above-described computerized system for the generation of data for the sale and manufacture of continuous feed centrifuges provides a comprehensive method and apparatus for streamlining the process of collecting and checking the data needed to design a centrifuge, and then using the data for a series of tasks including rough designed and costing of a potential centrifuge, final designing of a centrifuge, and the generation of the data needed by manufacturing with which to build a centrifuge of the design just completed. Additionally, the system according to the current invention automates the creation of an installation and maintenance manual for the machine just designed and built, (e.g., capturing product data at creation for re-engineering).

The above-discussed and other features and advantages of the present invention will be appreciated and understood by those skilled in the art from the following detailed description and drawings.

### Brief Description of the Drawings:

Referring now to the drawings wherein like elements are numbered alike in the several FIGURES:
FIGURE 1 is a workflow diagram of quoting, designing and manufacturing functions for centrifuges in accordance with the prior art;
FIGURE 2 is a parametric program dataflow diagram for centrifuges in accordance with the present invention;
FIGURE 3 is a diagrammatic view of a select run option window in accordance with the present invention;
FIGURE 4 is a parametric bowl program logical flow diagram in accordance with the present invention;
FIGURE 5 is a diagrammatic view of a main menu for a solid bowl program in accordance with the present invention;
FIGURE 6 is a diagrammatic view of a select machine size menu in accordance with the present invention;
FIGURE 7 is a diagrammatic view of a select bowl head status menu in accordance with the present invention;
FIGURE 8 is a diagrammatic view of a stress analysis results window in accordance with the present invention;
FIGURE 9 is an example of a generated bowl stress analysis report in accordance with the present invention;
FIGURE 10 is a view of a bowl, solids model, in accordance with the present invention;
FIGURE 11 is a diagrammatic view of a select one portion menu in accordance with the present invention;
FIGURE 12 is an example of a generated mass properties report for a solid bowl in accordance with the present invention;
FIGURE 13 is an example of a generated partial bill of material in accordance with the present invention;
FIGURE 14 is an example of a generated partial routing sheeting in accordance with the present invention;
FIGURE 15 is an outline and foundation logical flow diagram in accordance with the present invention;
FIGURE 16 is a diagrammatic view of a main menu for an outline and foundation program in accordance with the present invention;
FIGURE 17 is a diagrammatic view of a process parameters menu in accordance with the present invention;
FIGURE 18 is a diagrammatic view of a select material of construction menu in accordance with the present invention;
FIGURE 19 is a diagrammatic view of a main drive motor data menu in accordance with the present invention;
FIGURE 20 is a diagrammatic view of a select designs option menu in accordance with the present invention;
FIGURE 21 is a diagrammatic view of a processing menu in accordance with the present invention;
FIGURE 22 is a Young filter logical flow diagram in accordance with the present invention;
FIGURE 23 is a diagrammatic view of a main menu for a Young filter program in accordance with the present invention;
FIGURE 24 is a diagrammatic view of an output options menu in accordance with the present invention;
FIGURE 25 is an on-line parametric manual and utility logical flow diagram in accordance with the present invention;
FIGURE 26 is a diagrammatic view of a main menu and tool bar in accordance with the present invention;
FIGURE 27 is a diagrammatic view of a file selection submenu in accordance with the present invention;
FIGURES 28A and B are diagrammatic views of a parameters selection submenu in accordance with the present invention;
FIGURE 29 is a diagrammatic view of a topic files selection submenu in accordance with the present invention;
FIGURE 30 is a diagrammatic view of a parameters customized main window in accordance with the present invention;
FIGURE 31 is a diagrammatic view of a distribute selection submenu in accordance with the present invention;
FIGURE 32 is a diagrammatic view of a manual selection submenu in accordance with the present invention;
FIGURE 33 is a diagrammatic view of an update selection submenu in accordance with the present invention; and
FIGURE 34 is a diagrammatic view of a languages selection submenu in accordance with the present invention.

### Description of the Preferred Embodiment:

The present invention generally comprises computer programs for automating the design-to-product delivery environment (e.g., engineering and manufacturing processes) for in-line or continuous feed type centrifuges, Young filters and similar machines. These programs are referred to herein as parametric programs and are more than just a collection of tools to optimize engineering productivity. They integrate customer requirements with the design intent and the engineering/manufacturing processes, new technologies and changing organizational structures. The parametric programs of the present invention collect current design engineering knowledge used to design centrifuge products, Young filters and similar machines (collectively referred to herein as centrifuge products) and embed these design-for-manufacturing concepts within the computer programs. In addition, these programs capture process parameter expertise and embed the resulting decision-making algorithms into the programs.

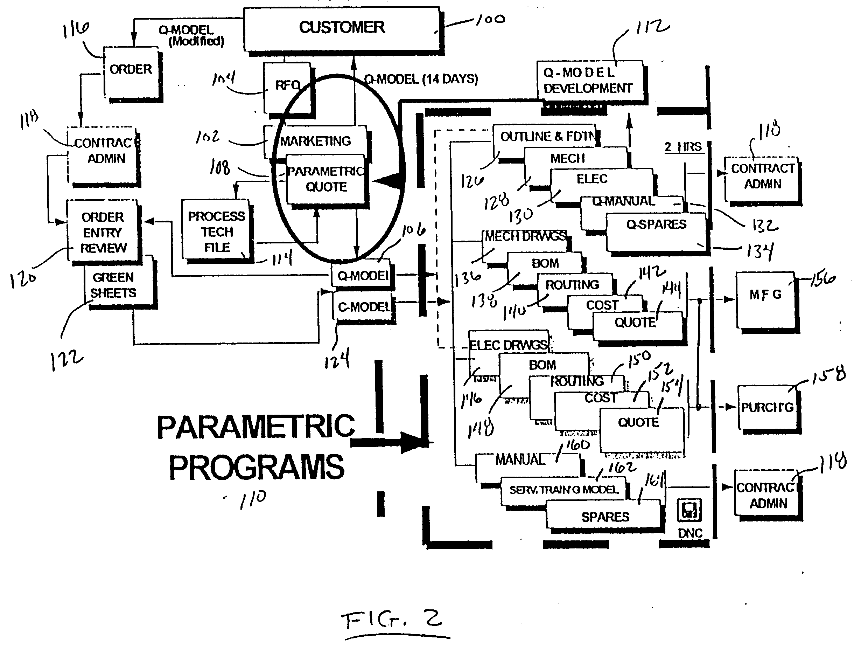

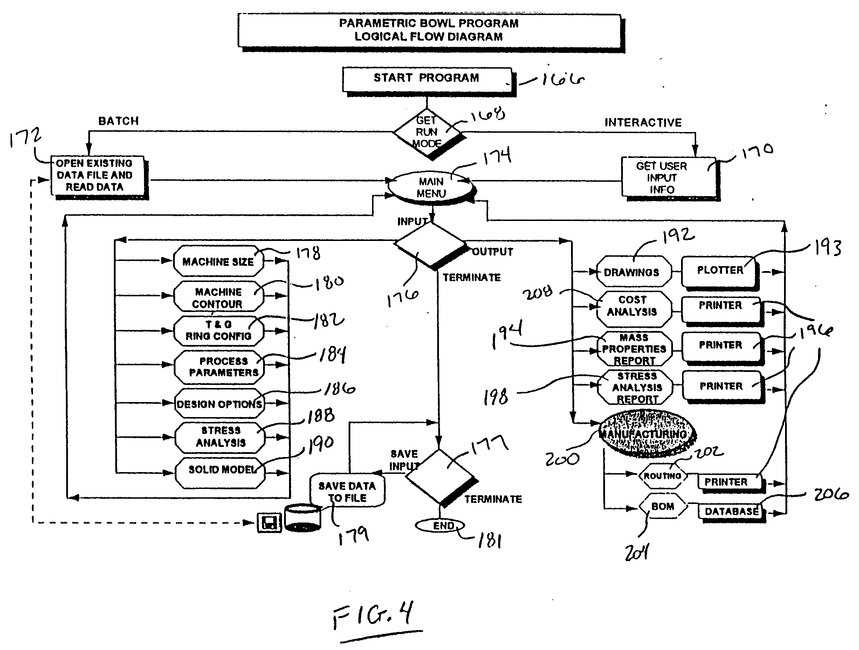

Referring to FIGURE 2, parametric dataflow for the present invention is generally shown. A customer 100 is contacted by marketing 102 or visa-versa, whereby a request for quote 104 is generated. The request for quote 104 will specify the customer's requirements wherein centrifuge parameters or material separation requirements are specified. This data 106 is loaded into a computer for purposes of generating a quote 108. Parametric programs 110 which are stored in the memory of the computer process the data to generate quote model 112. A price is derived using process information 114 based on the quote model and a centrifuge design and price, i.e., the quote 108, are then presented to the customer and a purchasing decision is made. If an order 116 is placed it is processed through contract administration 118 and order entry 120 in the usual manner. Sheets 122 ordering the work are generated and the customer's ordered centrifuge data 124 is accessed, whereby the parametric programs will generate the appropriate purchasing and manufacturing information, e.g., in the form of graphics, BOMs, Routing Sheets, etc.

Parametric programs 110 include routines for centrifuge outline and foundation 126, mechanical design 128, electrical design 130, a manual 132 and spares requirements 134. These routines being used for quoting and interfacing with other routines, described below for manufacturing and purchasing. Parametric programs 110 include routines for generating mechanical drawings 136, mechanical bills of materials 138, mechanical routing 140, mechanical cost 142, mechanical quoting 144, electrical drawings 146, electrical bills of materials 148, electrical routing 150, electrical cost 152, and electrical quoting 154; which are used by manufacturing 156 and purchasing 158 in the usual manner. Routines are also provided for generating a unit manual 160, a service training model 162 and unit spares requirements 164, which are use by contract administration in the usual manner.

Parametric programs 110 were written, in the present example, in a EDS Unigraphics© (UGII™) programming language called GRIP (graphics interactive programming), which allows interfacing with an UGII CAD/CAM/CAE type system, whereby process and design parameters are entered that define a product, automatically create the piece parts in wireframe and solids on the CAD system, automatically create engineering drawings, create bill of materials (BOM) automatically, create manufacturing routing sheets and reports, share algorithms and data with the documentation authoring utility, as described hereinabove. UGII is an interactive, menu-driven 3D system for Computer-Aided Design (CAD), Computer-Aided Manufacturing (CAM), and Computer-Aided Engineering (CAE). However, it is within the scope of the present invention that other programming languages suitable for accomplishing these task may be employed without departing from the spirit or scope of the present invention. This is a user friendly system employing a tutorial method of operation (i.e., dialog). The system asks questions via a menu format and the user answers the questions by either clicking with a mouse or pushing a macro button key. UGII provides both a conceptual and detail design tool function. The design models produced can have both solid and wireframe/surface representations. This geometric information can also be used for such tasks as FEA meshing, assembly modeling, drafting, NC tool path generation facilitates, and the accurate and efficient transfer of information during the product design cycle by building a common data base. Employed at concept design phase (i.e., inception) the software tool of the present invention along with the UGII CAD system creates and documents the complete product and its components; also the present invention software will design the tools and fixtures required to manufacture the product.

The program is preferably setup to design systems which meet standard engineering and manufacturing practices, e.g., ISO-9001 Compliance, and provide database access during re-engineering and customer modifications. The look and the function of the parametric program menus are very similar. The user interface is designed using an event-driven model. That is, the main menu is displayed and submenus pull down to allow selection of parameter data entry. The user is always returned to the main menu and the program waits for further user interaction. The user screens are consistent from program to program. An event-driven paradigm is preferably applied to the parametric programs, whereby cascading menus, which can be confusing to the user, are avoided. By applying event-driven techniques, the user controls the program and the programs are basically easy to manage. The main program screen provides menu-managed workflow process that can be customized to meet specifically defined product requirements. The menus have a top portion for input and a bottom portion for output.

Design knowledge is typically handed down over many years from employee to employee. In time, this knowledge becomes undocumented, intuitive and foggy. The workflow cannot be captured, tracked, or accounted for. The parametric programs capture this human intelligence, hands-on experience/wisdom, and define the design intent in an integrated, concurrent engineering environment. These programs gather, organize and store design knowledge in the form of specific algorithms which are dynamically accessed for on-demand results.

The parametric programs input parameters are defined by a process. These parameters are used by the program to set other defining parameters in the program. These defining parameters are, for example, material thicknesses, flange diameters, cylinder lengths, etc., depending on what machine is being designed. By capturing all of these process parameters, the parametric programs designs and model the machine.

The parametric programs have independent input and processing modules (see TABLE 1 below), whereby many versions of the input interface are written on multiple platforms to collect and format the input data. The final formatted data is fed to a processing module for generating the outputs. The outputs of the parametric programs include, e.g., design data, manufacturing data, bill of materials, routing sheets and reports as described hereinbefore.

**TABLE 1**

| RUN MODE | INTERACTIVE | BATCH |
|---|---|---|
| Input Selection | User Required To: | Input Data File Name |
| | Input Text | (this file contains all required input parameters.) |
| | Select Options | |
| | Define All Design Aspects | |
| Output Selection | Dependent on what machine is being designed. | Dependent on what machine is being designed. For example, some designs require just engineering drawings; others, manufacturing geometry and BOM and routing information |
| | Engineering Drawings | |
| | Manufacturing Geometry | |
| | BOM / Routing Info | |

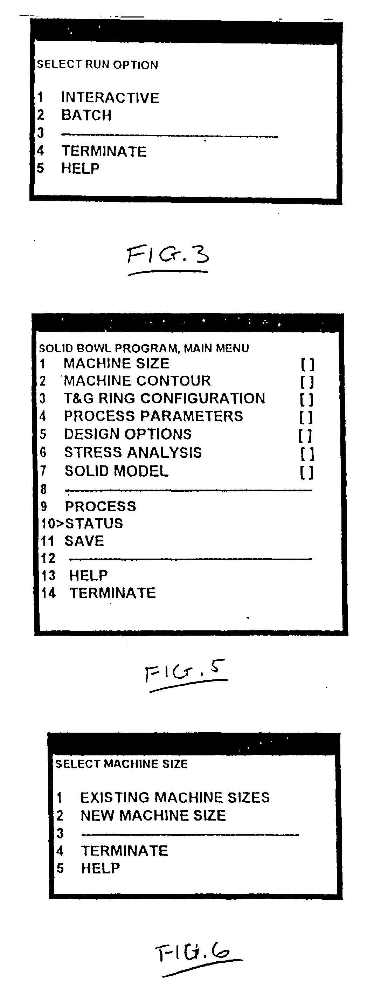

The interactive and batch input capabilities are important features of the present invention. The parametric programs of the present invention presently require high end hardware and software. However, the interactive input of parameters is a low end process in terms of capability and complexity. Since, in one mode of operation, the parametric programs read a data file and get the parameters rather than from user interactive input, there is a disconnect between the creation of the data file and the parametric program. Therefore, an important feature of the present invention is that the parametric programs do not care where the data files are created, as long as they are in the correct format. This means that another program, completely independent of the parametric programs can be run on a low end PC type platform that allows users to define the required parameters. This independent program would create the data file in the correct format. The data file would be copied to the high end system, and the parametric programs would read this data file and create the required outputs. This process frees up the expensive high end systems for more important, productive work and transfers the time consuming, low-tech process of data entry to a less expensive system. A select run option window is shown in FIGURE 3 which allows a user to select the batch processing feature.

The major steps involved in creating and running GRIP are listed in TABLE 2 below.

**TABLE 2**

| | | |
|---|---|---|
| USER | 1. ACCOUNT | (User Operating System Account UNIX, UGII) |
| | 2. LOG IN | (User name and Password UNIX) |
| | 3. RUN UGII | (User name and Password UGII) |
| | 4. RUN GRIP | (Mouse and/or Macro Push Keys/Buttons) |
| | 5. FOLLOW TUTORIAL | (Documentation/Install/User Guides) |
| PROGRAMMER | 1. CREATE | (Source File) |
| | 2. COMPILE | (Convert source to Object File) |
| | 3. LINK | (Object Files to Executable Module) |
| | 4. RUN | (Executable Module either Interactively or Batch Processing) |

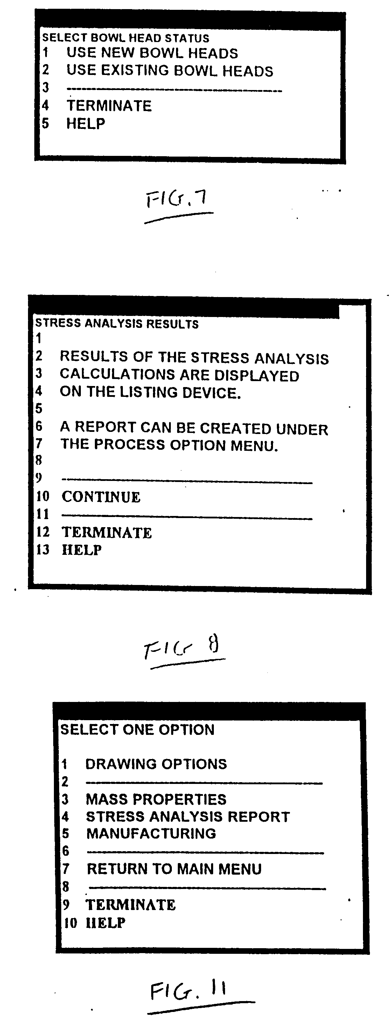

Referring to FIGURE 4, an example of a parametric program in accordance with the present invention is generally shown. More specifically, a logical flow diagram for a centrifuge solid bowl design is shown. The solid bowl design routine was selected from menus, as described hereinbefore. This selection will start the program, indicated at block 166. Interactive or batch run mode is selected at a menu (FIGURE 3), indicated at block 168, thereby defining the data source. If the interactive run mode is selected, then a user inputs the data/parameters, indicated at block 170. If the batch run mode is selected, then a data file is accessed, indicated at block 172. Regardless of the source of the data, a main menu 174 is provided to select a desired operation. Selections from menu 174 include input operations, output operations and termination of routine, indicated at 176. If termination is selected a decision, indicated at 177, is made as to whether or not the inputted data is to be saved and data to be saved is saved at block 179, thereafter the program ends, indicated at 181.

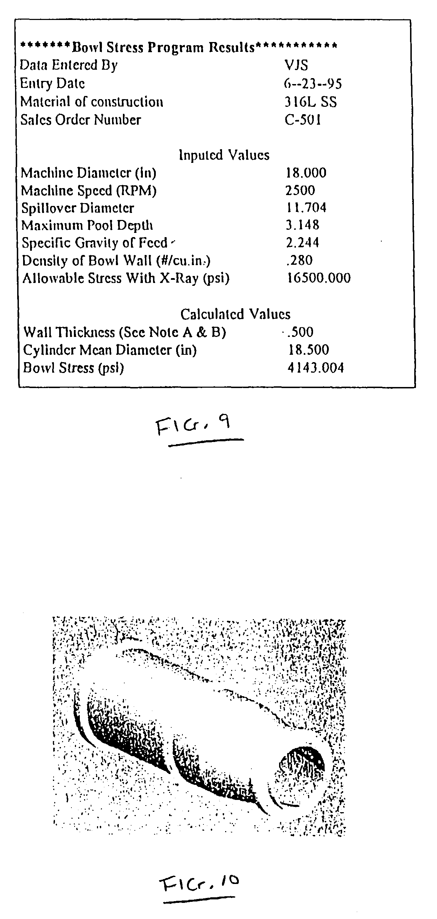

Main menu 174 of the solid bowl program is shown in FIGURE 5. Menu 174 is divided into two sections. The top part of the menu is for input and bottom part of the menu is for output. The input options will be describe first and then the output options will be described.

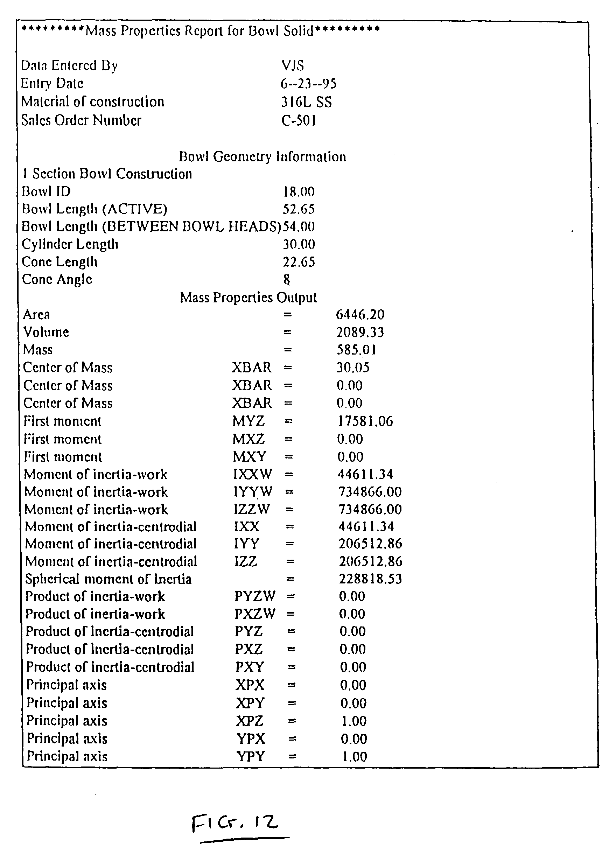

The machine size input option, indicated at 178, offers the user the ability to select from existing machine sizes or define an entirely new machine size, whereby when this option is selected a machine size menu (FIGURE 6) is provided. If the user selects existing machine sizes, a list of such are provided and many of the design parameters will be automatically set for those machine sizes. If the user selects the new machine size option, the user will be required to enter many undefined machine parameters. Regardless of how the machine size is elected, a select bowl head status menu (FIGURE 7) is provided. The select bowl head status menu provides for selection between new bowl heads and existing bowl heads, which are to be connected to the ends of the bowl. If the user selects existing bowl heads, a list of such are provided and many of the design parameters will be automatically set for those machine sizes. If the user selects the new bowl heads, the user will be required to enter many undefined machine parameters.

The machine contour option, indicated at 180, allows the user to select from a list of predefined contours. After selecting one of the predefined contours, various parameters defining the contour are automatically set.

The tongue and groove ring configuration option, indicated at 182, allows the user to define the tongue and groove configuration. This option allows the user to move the rings, size the rings, add rings and change the design of rings to meet the design requirements.

The process parameters option, indicated at 184, prompts the user for process parameters by way of a process parameters menu. These process parameters are critical in the designing of the bowl. These parameters define the algorithms which determine the speed of the machine, the bowl thickness, the length of the bowl, the bowl angle, and so forth. The process parameters defined here will set limits to the selection of other machine components. An example of the link between this menu and other parameters selections in the program is the temperature parameters. Depending on the temperature entered here, limits will be set on the type of lubrication system that can be selected later on. This linkage of parameter selection/definition exists throughout the program.

The design options option, indicated at 186, presents a list of design options for the bowl for selection. These design options include, e.g., strips, hard facing, liner material, and so forth. These are preferably toggle selections whereby the user is able to either select the item or unselect the item.

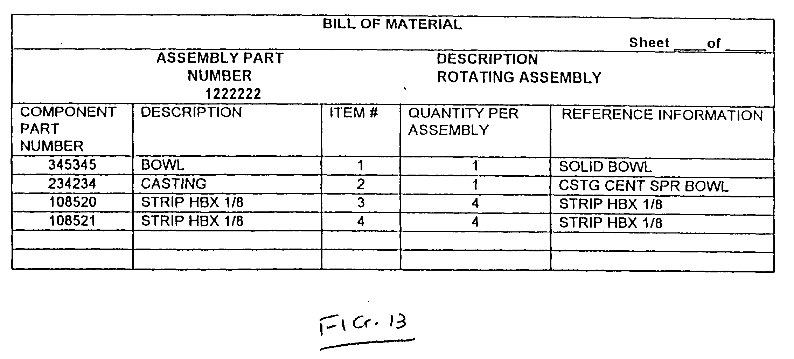

The stress analysis option, indicated at 188, performs a stress analysis on the current bowl design. After selecting this option calculations will be performed that are critical to the design of the bowl. These calculations include various pressures and stresses and so forth. The output of the stress analysis will include the wall thickness of the bowl. If all calculations are correct, the system will display a stress analysis results window (FIGURE 8) and generate an output report (FIGURE 9), described hereinafter.

The solid model option, indicated at 190, is actually an output, but it is located in the input section of the menu because it is necessary to perform this function before any other output can be obtained. Selecting this option will create an actual solid model of the bowl, e.g., see FIGURE 10.

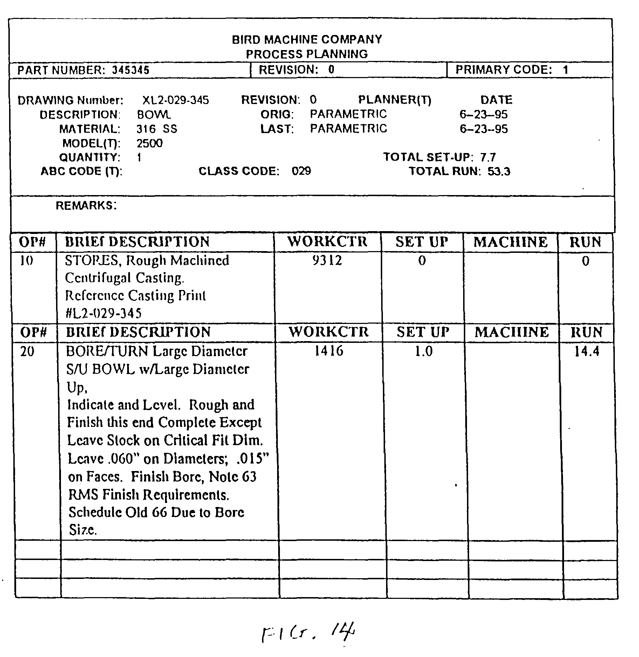

The output menu (FIGURE 11) appears when the user selects the process option from the main menu 174 (FIGURE 5). This menu provides the access mechanism for all outputs from this program.

The drawing options, indicated at 192, allows the user to output a plurality of drawings to plotter 193, e.g., with a one-piece bowl design, the program can output a finish drawing, a strip drawing, and a casting drawing, with a two-piece bowl there will be one drawing for each piece.

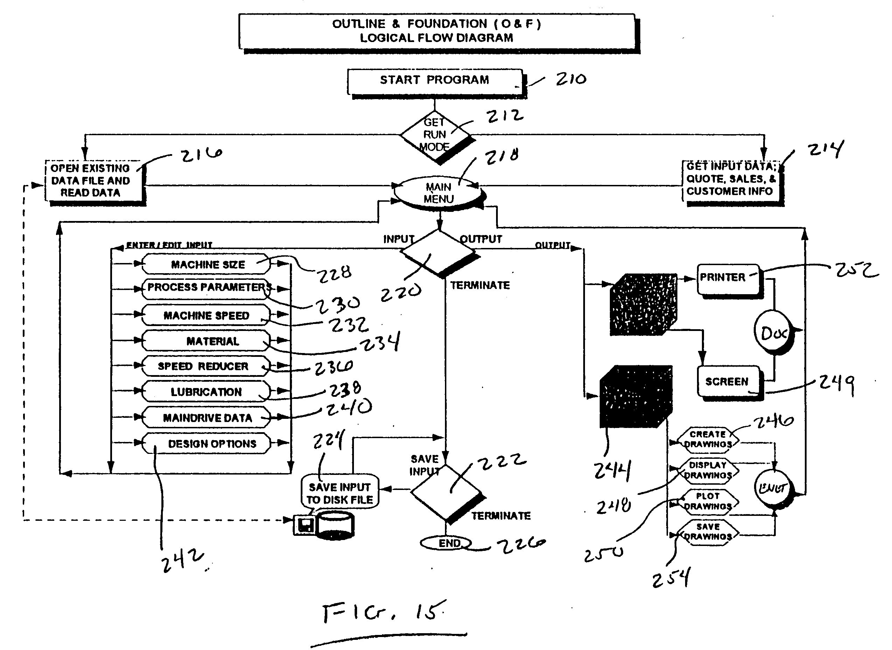

The mass properties output option, indicated at 194, generates a mass properties report, e.g., see FIGURE 12, for the bowl design. This report includes important data about the bowl and is displayed on the computer screen, sent to a printer 196, or saved to a disk or other storage medium.

The stress analysis report option, indicated at 198, generates the stress analysis report, e.g., see FIGURE 9, for the bowl design. It will be appreciated that this is the same report that was generated in the input option of the menu, described hereinbefore. This report is displayed on the computer screen, sent to a printer 196, or saved to a disk or other storage medium.

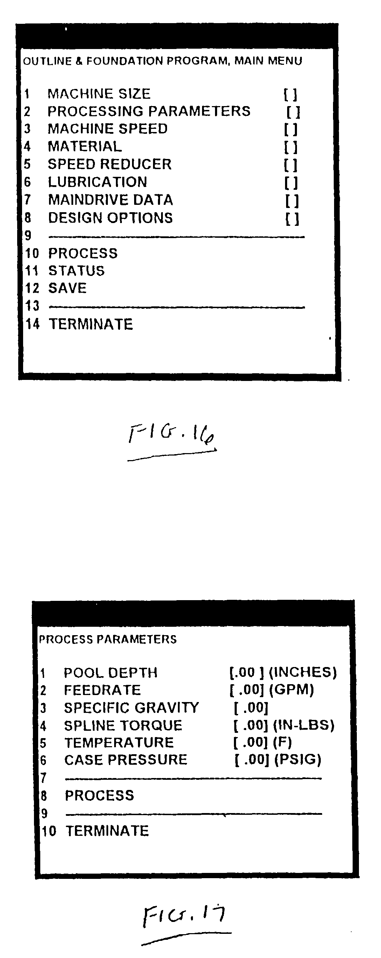

The manufacturing option, indicated at 200, provides for the generation of a routing sheet, indicated at 202, for the manufacture of the bowl and a bill of material, indicated at 204. The routing sheet describes the operation numbers, machining center numbers, and so forth, in the order in which the bowl is manufactured. These routing sheets are used by manufacturing to schedule the manufacture of the bowl. The bill of material shows the part numbers that the bowl reports to as well as the part numbers that report to the bowl. The routing sheets and/or the bill of material are displayed on the computer screen, sent to a printer 196, or saved to a disk or other storage medium, or saved at a database 206 for later retrieval. A partial example of such a routing sheet is shown in FIGURE 14. A partial example of such a bill of material report is shown in FIGURE 13.

Cost analysis, indicated at 208, is also performed with the results thereof displayed on the computer screen, sent to a printer 196, or saved to a disk or other storage medium

Referring to FIGURE 15, an example of another parametric program, i.e., an outline and foundation parametric program, in accordance with the present invention is generally shown. More specifically, a logical flow diagram for the outline and foundation parametric program is shown. The outline and foundation parametric program was selected from menus, as described hereinbefore. This selection will start the program, indicated at block 210. Interactive or batch run mode is selected at a menu (FIGURE 3), indicated at block 212, thereby defining the data source. If the interactive run mode is selected, then a user inputs the data/parameters, indicated at block 214. If the batch run mode is selected, then a data file is accessed, indicated at block 216. Regardless of the source of the data, a main menu 218 is provided to select a desired operation. Selections from menu 218 include input operations, output operations and termination of routine, indicated at 220. If termination is selected a decision, indicated at 222, is made as to whether or not the inputted data is to be saved and data to be saved is saved at block 224, thereafter the program ends, indicated at 226.

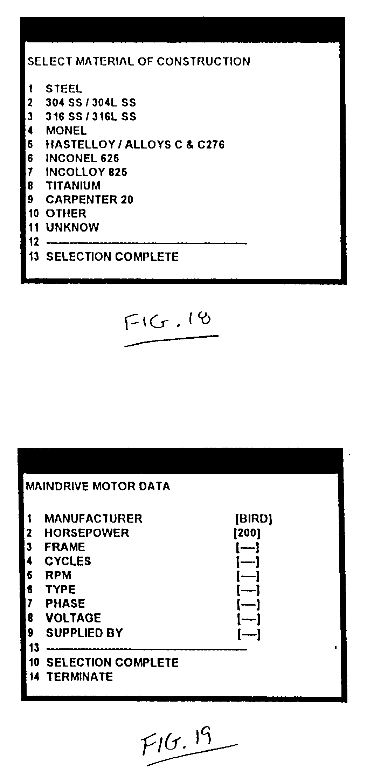

Main menu 218 of the outline and foundation parametric program is shown in FIGURE 16. Menu 218 is divided into two sections. The top part of the menu is for input and bottom part of the menu is for output. The input options will be describe first and then the output options will be described.

The machine size input option, indicated at 228, offers the user the ability to select from existing machine sizes or define an entirely new machine size, whereby when this option is selected a machine size menu (FIGURE 6) is provided. If the user selects existing machine sizes, a list of such are provided and many of the design parameters will be automatically set for those machine sizes. If the user selects the new machine size option, the user will be required to enter many undefined machine parameters.

The process parameters option, indicated at 230, prompts the user for process parameters by way of a process parameters menu (FIGURE 17). The process parameters defined here will set limits to the selection of other machine components. This linkage of parameter selection/definition exists throughout the program.

The machine speed option, indicated at 232, allows the user to select the maximum and minimum machine operating speeds. These values are preferably limited by previous process parameter selections.

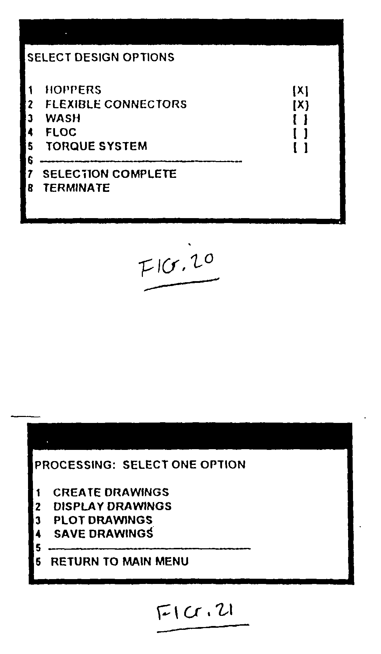

The material option, indicated at 234, presents a list of materials (FIGURE 18) that the machine can be constructed from. The user selects a material from the list (FIGURE 18) for the desired machine design.

The speed reducer option, indicated at 236, provides a list of available speed reducers for the machine. The lubrication option, indicated at 238, is controlled by the previously described process parameter selections. The main drive option, indicated at 240, displays a list/menu (FIGURE 19) of parameters to be defined for the maindrive for the specified machine.

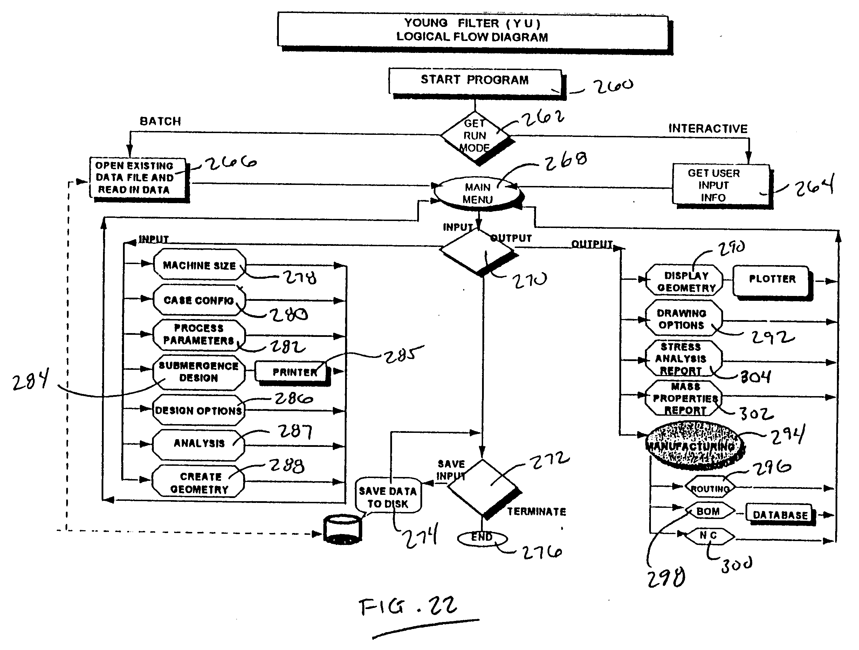

The design options, indicated at 242, provides a list/menu (FIGURE 20) of options for the machine. The user simply selects/de-selects the specific design option status in the menu.

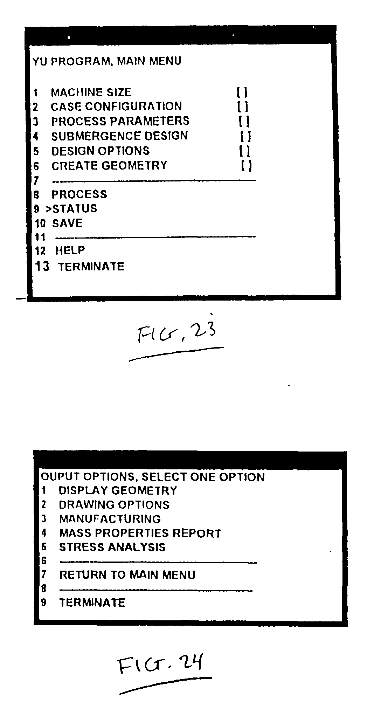

The output menu (FIGURE 21) appears when the process function, indicated at 244, is selected on the main menu 218. The create drawings option, indicated at 246, provides the function to create the drawings for the centrifuge outline and foundation layout. This function is selected by the user when all inputs have been defined as described in the input section. A three view drawing showing the layout of the machine on its mountings is generated. This drawing is detailed and shows all information needed for installing the machine, and a four view drawing showing the footprint of the machine and critical information for creating mounting bolts and bases, etc. is also created. The display drawings option, indicated at 248, allows the user to display on the computer screen 249 the drawings created in the create drawings option. After the drawings have been created and verified by screen display, selecting the plot drawings option, indicated at 250, sends the drawings to a printer/plotter 252 for hard copy creation. The save drawings option, indicated at 254, saves the newly created drawings to disk for future reference.

Referring to FIGURE 22, yet another example of a parametric program in accordance with the present invention is generally shown. More specifically, a logical flow diagram for a Young filter design is shown. The Young filter design routine was selected from menus, as described hereinbefore. This selection will start the program, indicated at block 260. Interactive or batch run mode is selected at a menu (FIGURE 3), indicated at block 262, thereby defining the data source. If the interactive run mode is selected, then a user inputs the data/parameters, indicated at block 264. If the batch run mode is selected, then a data file is accessed, indicated at block 266. Regardless of the source of the data, a main menu 268 is provided to select a desired operation. Selections from menu 268 include input operations, output operations and termination of routine, indicated at 270. If termination is selected a decision, indicated at 272, is made as to wether or not the inputted data is to be save, data to be saved is saved at block 274, thereafter the program ends, indicated at 276.

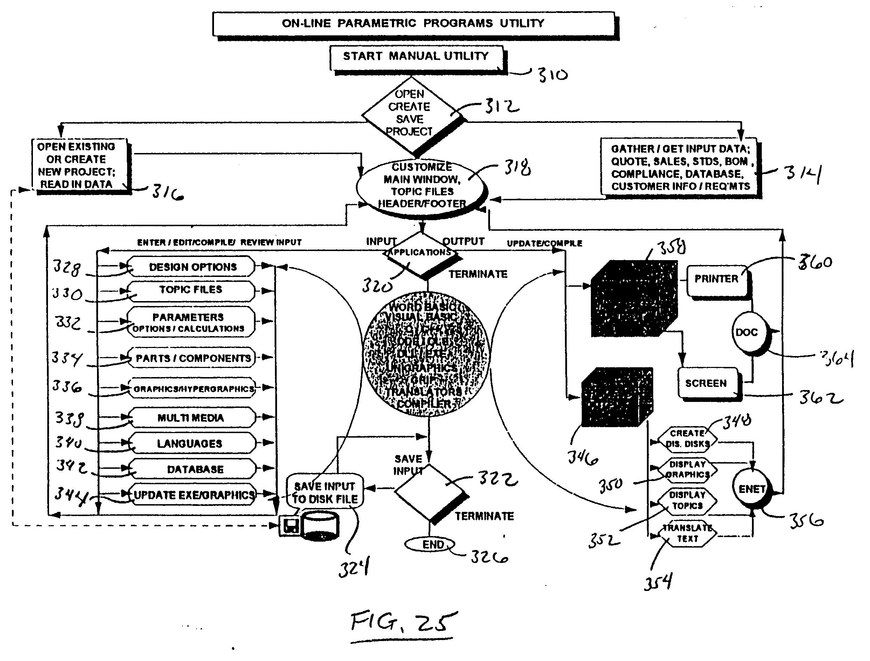

Main menu 268 of the Young filter program is shown in FIGURE 23. Menu 268 is divided into two sections. The top part of the menu is for input and bottom part of the menu is for output. The input options will be describe first and then the output options will be described.

The machine size input option, indicated at 278, offers the user the ability to select from existing machine sizes or define an entirely new machine size, whereby when this option is selected a machine size menu (FIGURE 6) is provided. If the user selects existing machine sizes, a list of such are provided and many of the design parameters will be automatically set for those machine sizes. If the user selects the new machine size option, the user will be required to enter many undefined machine parameters.

The case configuration option, indicated at 280, allows definition of the case orientation (e.g., left or right), case top type, and selection of material of construction of the case top and the case bottom.

The process parameters option, indicated at 282, prompts the user for process parameters by way of a process parameters menu. The process parameters defined here will set limits to the selection of other machine components. This linkage of parameter selection/definition exists throughout the program. Parameters defined in this option include: the material, rate and consistency of the material that the machine will process; the case pressure; the design temperature; the drum vacuum; and the vacuum gas flow.

The submergence design option, indicated at 284, is a sub-process used in the design of the machine. Submergence parameters are determined during the initial and final stages of the design process. This is normally a time-consuming process. Having this sub-process integrated into the parametric program allows for these decisions to be made quickly. Also, output from this process is not only used by the parametric program for other design decisions, but the output is also made available, by way of printer 285, for presentation to the customer up front in the earliest stages of the design.

The design options option, indicated at 286, is a very lengthy input process. There are many design options possible with a Young filter case including doors, windows, nozzles, etc. The analysis option is indicated at 287. After defining all input parameters, the create geometry option, indicated at 288, is selected to create all the wireframe and solids geometry for the Young filter case.

Once the case geometry has been created by selecting the create geometry option 288, the outputs of the program can be generated. Selecting the process option 282 in the lower part of the main menu 268 brings up the output menu shown in FIGURE 24.

The display geometry option, indicated at 290, contains several submenus for defining very specific parts of the machine for display and submenus for defining what views to display the geometry in. The display function provides flexibility in looking at the geometry. Drawing options, indicated at 292, are provided as in the other parametric programs described herein. The manufacturing option, indicated at 294, provides for creating routing sheets, indicated at 296, a bill of material, indicated at 298, and NC tooling, indicated at 300, of the case top and case bottom, similar to the above described embodiments. These routing sheets are used by manufacturing to schedule the machine parts to the manufacturing shop.

The mass properties report option, indicated at 302, creates a report for various parts of the machine, similar to that described in the earlier embodiments. The stress analysis option, indicated at 304, performs stress analysis on various critical parts of the machine.

Referring to FIGURE 25, a parametric integration authoring program is generally shown. The parametric authoring program is a windows environment integrating applications for the creation of hypertext product documentation. This client/server-type system addresses the management documents, imaging, business information, data base I/O, multiparty applications and workflow. It gathers and organizes the parametric-shared data; documents and manages the information as well as the graphics for on-line manuals; and manages and distributes this output using several programming platforms.

The program/utility allows the user to create a new product manual for a designed machine and other products. Using this utility, a user can: customize a manual main window to specify parameters about the customer requirements and the machine; customize the title of the topic files and the manual version number; edit, re-compile and review topic files; create all files required for a distribution disk; load a distribution disk; and test a distribution disk.

FIGURE 25 is a logical dataflow diagram for the on-line manual and applications programming integration utility program of the present invention. The main program is a Visual Basic, Multi-Document Interface (MDI) application. The program utilizes OLE technology. For example, OLE connections are made to Microsoft Word to provide editing and parameterizing capability in the utility. Integration with other applications is an important feature for parametric product data management; provides integration with existing applications by either spawning a process or sending them some type of message-based event notification when their intervention is needed (i.e., DDE or OLE or electronic messaging. etc). The use of these modular, event-driven building block applications can also initiate the workflow process. Workflow programs support drag-and-drop icon manipulations for creating data workflows and defining business rules (e.g., routes, rules, roles, etc.) The programs track product work-in-progress during design and development; provide users with tools to complete an action; provide applications programming integrations that let developers customize workflow services to meet product delivery.

The framework of the present invention manages the dataflow process, addresses both structured and unstructured process automation with focus on human activity path needs. The framework will also automate well-understood processes as well as address 'what if' scenarios. Preferably, the framework for an on-line data system is structured as a top-down method of layered open product data (i.e., a hierarchical structure, see TABLE 4 below). This hierarchical structure illustration is located in the README.txt file. It facilitates gathering, searching and re-engineering product I/O within the central repository for general topic areas. Relational database management with ready and dynamic access to shared information, distributed client/server networking technologies and providing early customer involvement during parametric design are integral components to the successful generation of an on-line manual of the present invention.

The on-line manual utility organizes information into easy-to-access packets called topics that remain within reach at all times. The windows viewer program displays the topic screens one at a time (e.g.,the current topic). Within these topic screens, hypertext allows the user to point and click on the information needed; so-called 'hot spots' then permit the user to navigate to other screens to view specific information. There are two types of hot spots, 'pop-up' which are used to explain unfamiliar words and phrases on the spot by causing another topic to be displayed in a small window overtop the current topic; and topic 'jump' hot spots which advance to a new current topic and let the user follow a train of thought effortlessly from topic to topic. Jumps between topics in the application serve a purpose similar to cross-references in a book. Jumps appear underlined and current topics appear in green. These features offer pointers via text and hypertext links that allow the user to double back to previous screens and explore new areas without losing the original starting point screen; they also encourage user navigation and exploration through the information system. The hypergraphics allow a user to examine the most recent revision of the product layout and/or parts in both drawings and solids. When the hot spots are activated, they can cause another topic to be displayed. Creating hard-copy and hypertext documentation is a complex and difficult process. Hypertext is a non-linear presentation of textual and/or graphic information made possible by computers and hypergraphics is a graphic with embedded hot spots.

TABLE 4 below exemplifies a hierarchical framework structure schema which could be applied by a product team utilizing the parametric programs authoring environment in conjunction with the present invention for a customer-specific quote. The README.txt file could then be customized during product creation to inform and update the collocation product teams and ensure concurrent art-to-product information to meet delivery.

**TABLE 4**

| GROUP SPECIFIC | INFORMATION STYLE | MANUAL FEATURES | ON-LINE FEATURE |
|---|---|---|---|
| Customer & Mfg. | Hierarchical | Functional Topics | Hierarchical Function |
| Product Team | Process Flow | Contents, Browser | Connectivity |
| User | Random Access | Cross Reference | Hypertext Links, Find+ Hyper Viewer PrintAll, Browser, FAX Utility |
| Operator | Hands-On | Glossary, Linkages | |
| Service Engr | Free-Form | Keywords | Hot Spots, Jumps, Graphics, |
| Field Reps | Data Base I/O | Concurrency | |
| Remote Sites | | Graphics | Associativity |
| Sales, Finance, Marketing | As Needed | Maps, Pictures, Graphics, Icons, Database Mgmt | Pop-Ups |
| | Parametric Quotes | | Network |
| | Data Base I/O | | |
| Engineering | Parametrics I/O | Concurrent | Open Data Manager |
| Manufacturing | Documents I/O | Art-To-Product | Tools, Workbench |
| Developers/Programmers | Data Base I/O | Windows Environment | Real Time System-to-Human Activity Path |

The manual utility includes a Winhelf Application called WinHelp HyperViewer and Find +, which is a stand-alone Windows-based application that displays the contents of Help (.HLP) files created by the Help Compiler. The Winhelf Function is a function within Windows application programming interface that application developers use to display and control Help from the application. The Browse Sequence includes Browse Forward and Browse Back buttons on the tool in WinHelp, a user can move through topics in a linear fashion. The order the user follows when moving from topic to topic is called a browse sequence. The Cross Reference Connections are connections made within text or hypertext (i.e., a link to another screen) which allow the reader easy access to non-hierarchical or non-sequential information related to the topic. The HyperViewer & Find+ are to a Help system what File Manager is to a hard disk. More specifically, instead of displaying the files and directories on a hard disk, the HyperViewer displays the topics and hot spots in a Help system. The HyperViewer is displayed as books and pages. The HyperViewer includes a print feature to enable the user to print the entire topic file or multiple topic files. HyperViewer is a true representation of the hypertext links in the Help system; jump topics and pop up topics are represented by different icons; it also contains features which will help the user navigate through this on-line technical manual. The WinHelp Find+ allows the user to search for a word or phrase through the entire text of a Help file. It lists topics in which the word or phrase occurs and shows how many times the it occurs within each topic. The WinHelp Find+ also allows the user to jump to the topic or print the topic.

Referring still to FIGURE 25, the manual utility was selected from menus, as described hereinbefore. This selection will start the program, indicated at block 310. Interactive or batch run mode is selected at a menu (FIGURE 3), indicated at block 312, thereby defining the data source. If the interactive run mode is selected, then a user inputs the data/parameters, indicated at block 314. If the batch run mode is selected, then a data file is accessed, indicated at block 316. Regardless of the source of the data, a main window 318 is provided to selected a desired operation. Input operations, output operations and termination of routine, are decided at 320. If termination is selected a decision, indicated at 322, is made as to wether or not the inputted data is to be save, data to be saved is saved at block 324, thereafter the program ends, indicated at 326.

Input options include the following routines: design options 328; topic files 330; parameters 332; parts/components 334; graphics/hyper graphics 336; multi media 338; languages 340; database 342 and update EXE/graphics 344. Output options include the following routines: process output 346 which includes create disks 348, display graphics 350, display topics 352 and translate text 354, all of which interface with a network 356; and distribute output 358 which includes a printer 360 and a screen 362 to generate an output at 364.

Customizing an on-line manual per customer order comprises the steps of: gathering parametric, business, new data and customizing; designing, developing utility infrastructure; outlining and creating list of topics; re-engineering, writing and editing topics; entering control codes; gathering and tailoring graphics/ macros; creating project files and compiling source files; testing and debugging system; programming the application to access help; and creating distribution disks.

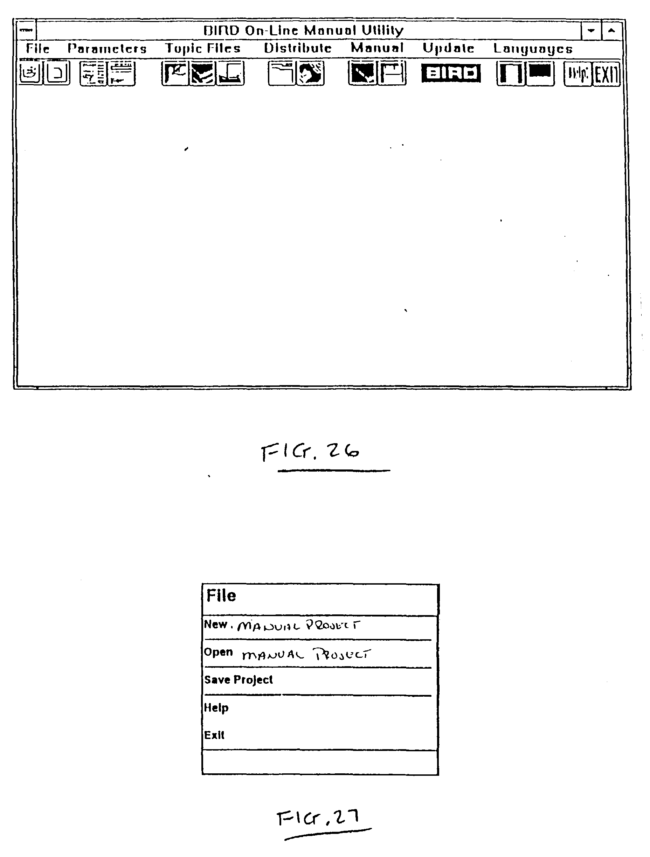

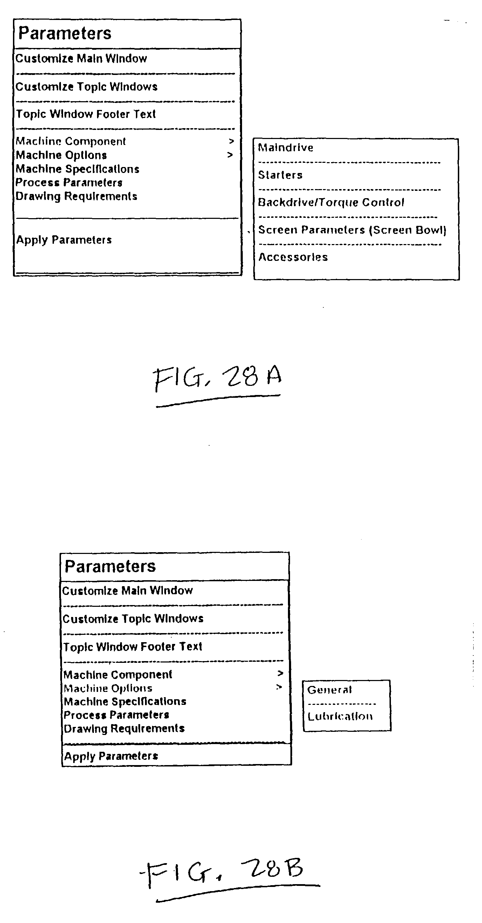

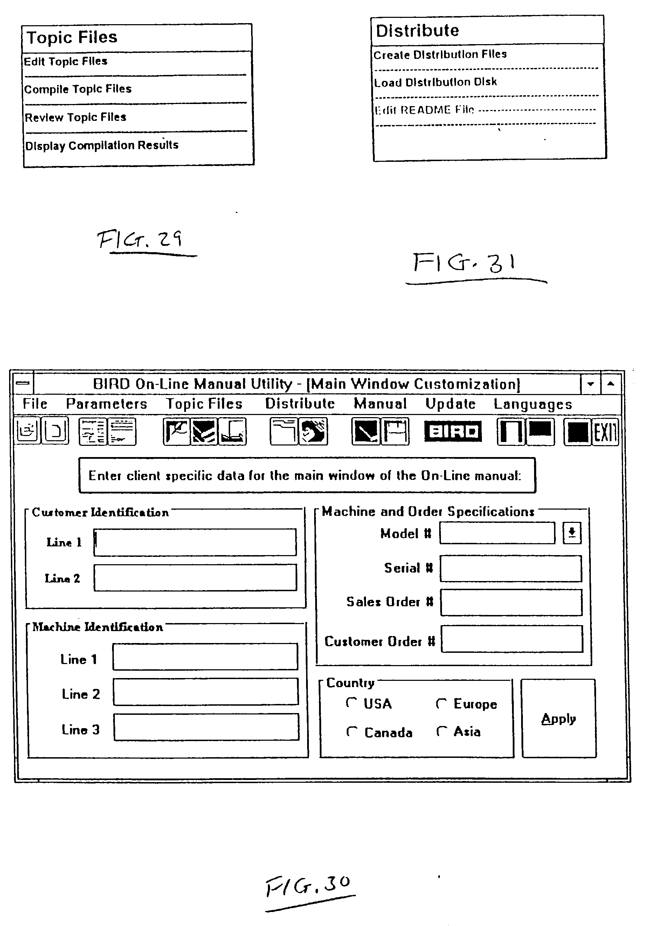

Referring to FIGURE 26, a main menu and tool bar are shown. The File Selection Submenu is a tool bar option, wherein the File pull down menu (FIGURE 27) allows the user to select New Project to create a new on-line manual; Open Project allows access to existing projects; Save Project will save and return RTF files to their project directory; Help allows the utility user to access the Help System, and Exit will close the utility. The Parameters Selection Submenu is a tool bar option, wherein the Parameters pull down submenu (FIGURES 28A and B) allows customer and/or project customization of the on-line manual. Selection also allows access to the gathered parametric programs data as well as selecting machine component specific data and program calculations per product. The Topic Files Submenu Selection is a tool bar option, wherein the Topic Files Submenu (FIGURE 29) contains the mechanisms to manage and compile the project topic files. Each topic file can be accessed for editing, compiling, and reviewing the compilation results. This is an important feature of the on-line manual utility. It contains a Help Compiler executable and produces all hypertext and hypergraphics for the finished product manual.

Referring to FIGURE 30, a form for customizing the main window is shown. To customize the main window of the manual, select the Customize Main Window menu option or press the Customize Main Window button on the tool bar. This brings up the form shown in FIGURE 30. This form allows customization of various parts of the main window of the on-line manual utility.

The Distribute Submenu Selection is an option, wherein the Distribute Submenu (FIGURE 31) contains the applications executable and dynamic-link libraries (DLLs) to create the on-line project manual distribution files; subsequently, it compiles and compressses these files and then loads the distribution disks. The release notes for a specific version of the on-line product manual can be edited by selecting 'Edit Read me File' and will then be included in the README.txt file of the on-line manual. Additionally, an example table is located in the README.txt file giving the user an overview of a hierarchical data structure scenario or on-line manual framework.

The Manual Submenu Selection is an option, wherein the Manual Submenu (FIGURE 32) runs the compiled results by invoking the manual executable. The Review Manual enables the user to preview the preliminary finished product during the development phase.

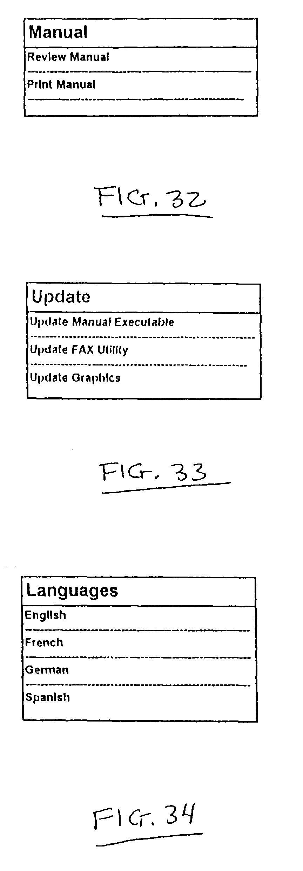

The Update Submenu Selection is an option, wherein the Update Submenu (FIGURE 33) allows the new revisions to be included in the manual program executable, fax utility revisions to be included in the fax utility executable, and all new and revised graphics for specific projects to be included as well. The topic files must then be recompiled and the project saved often.

The Languages Submenu (FIGURE 34) runs third party conversion software which will translate, at an elementary level, the text from the English language to French, German, and Spanish. The Help button brings the On-Line Manual Utility Help System to the screen and the Exit button closes the On-Line Manual Utility.

While preferred embodiments have been shown and described, various modifications and substitutions may be made thereto without departing from the spirit and scope of the invention. Accordingly, it is to be understood that the present invention has been described by way of illustrations and not limitation.

## Claims

1. A method for designating a rotating separation equipment product, comprising:
entering individual rotating separation equipment requirements in a computer system;
calculating selected rotating separation equipment parameters from said rotating separation equipment requirements, in a processor of a computer system; and
designating a rotating separation equipment product, said step of designating comprising one of,
(A) selecting from a data base of rotating separation equipment products stored in a memory said rotating separation equipment product, based on said calculated rotating separation equipment parameters, or
(B) designing said rotating separation equipment product from a data base of rotating separation equipment design requirements stored in a memory, based on said calculated rotating separation equipment parameters.

2. The method of claim 1 wherein said step of designating further comprises:
modeling and/or re-engineering rotating separation equipment design in real time.

3. The method of claim 1 wherein said step of designating further comprises:
modeling and/or re-engineering rotating separation equipment interactively with the computer system.

4. The method of claim 1 further comprising:
generating manufacturing information for said rotating separation equipment product designated.

5. The method of claim 4 wherein said manufacturing information comprises drawing data, bill of material data, routing sheet data or machining data.

6. The method of claim 1 further comprising:
generating quoting data for said rotating separation equipment product designated.

7. The method of claim 1 further comprising:
generating manual data for said centrifuge product designated during design, during development and including the on-line manual with delivery of product.

8. A method of parametric program comprising:
selecting an input data source from a batch run mode or an interactive run mode;
selecting an operation from a main menu, said main menu having at least one input routine and at least one output routine selectable therefrom;
generating parameters from said input data with said at least one input routine, with said at least one input routine comprising manufacturing information for a rotating separation equipment product; and
generating output data for rotating separation equipment from said parameters with said at least one output routine.

9. The method of claim 8 wherein said manufacturing information comprises drawing data, bill of material data, routing sheet data or machining data.

10. The method of claim 8 wherein said output data generated from said parameters with said at least output routine comprise quoting data for a centrifuge product.

11. The method of claim 8 wherein said output data generated from said parameters with said at least output routine comprise manual data for a centrifuge product.
